# EUROPÄISCHE PATENTSCHRIFT

(11) **EP 4 488 747 B1**
(45) Veröffentlichungstag und Bekanntmachung des Hinweises auf die Patenterteilung: **05.11.2025**
(21) Anmeldenummer: 23183335.1
(22) Anmeldetag: 04.07.2023
(51) Int. Cl.: G02F 1/1333

(54) **BEFESTIGUNGSCLIP UND ANZEIGEVORRICHTUNG MIT EINEM LÖSBAR MONTIERTEN DISPLAY**
FIXING CLIP AND DISPLAY DEVICE HAVING A REMOVABLY MOUNTED DISPLAY
CLIP DE FIXATION ET DISPOSITIF D'AFFICHAGE COMPRENANT UN ÉCRAN MONTÉ DE MANIÈRE AMOVIBLE

(43) Veröffentlichungstag der Anmeldung: 08.01.2025
(73) Patentinhaber: RAFI GmbH & Co. KG, 88276 Berg (DE)
(72) Erfinder: Fischer, Helmut, 88255 Baienfurt (DE)
(74) Vertreter: Christ, Niko

(56) Entgegenhaltungen:
- US-A1- 2016 062 523
- US-B2- 8 264 635

## Beschreibung

Die vorliegende Erfindung betrifft einen Befestigungsclip zur Montage eines Displays in einem Gehäuse sowie eine Anzeigevorrichtung mit einem lösbar montierten Display.

Es ist im Stand der Technik bereits hinlänglich bekannt, Displays in Gehäusen zu befestigen. Hierfür finden derzeit verschiedene Ansätze Anwendung. Eine erste Möglichkeit der Montage besteht in einem Anschrauben des Displays an dem Gehäuse. Das ist möglich bei Displays, welche eine Anschraubmöglichkeit in Form von Anschraubbohrungen aufweisen. Es existieren auch Displays, die für eine axiale oder eine seitliche Verschraubung geeignet sind. Bei einer seitlichen Verschraubung sind in der Regel noch zusätzliche Winkel notwendig. Beide Varianten sind aufgrund der zunehmenden Miniaturisierung immer seltener möglich. Neuere Displays sind sehr flach aufgebaut, weisen einen sehr schmalen Rand auf und besitzen keine Anschraubbohrungen, sodass eine direkte Verschraubung nicht mehr möglich ist.

Eine weitere Möglichkeit der Displaymontage besteht darin, das Display in das Gehäuse einzukleben. Dies hat zwar den Vorteil, dass eine Staubdichtung auf der Vorderseite des Displays entfallen kann, aber gleichzeitig den Nachteil, dass das Display nicht mehr, oder nur mit erhöhtem Aufwand, demontiert werden kann.

Des Weiteren können Displays auch montiert werden, indem sie auf der Rückseite durch ein hartes oder durch ein elastisches Teil abgestützt werden. Bei der Abstützung mit einem harten Teil, wie etwa einem Montageblech oder einem Kunststoffteil, ergibt sich das Risiko, dass bei ungünstiger Toleranzlage ein sehr hoher Druck auf die Staubdichtung auf der Vorderseite ausgeübt wird. Dieser hohe Druck entsteht dadurch, dass aufgrund der Toleranzlage der Spalt zwischen Displayvorderseite und der für eine Touchfunktion erforderliche Zwischenlage sehr klein und dadurch die Staubdichtung sehr stark komprimiert wird. Dies kann auch zu einer Beschädigung der Verklebung zwischen Frontglas und Gehäuse führen. Die Folge davon kann eine Undichtigkeit des Gerätes sein, wodurch wiederum, je nach Anwendung, ein Sicherheitsrisiko aufgrund eines möglichen Geräteausfalls entstehen kann.

Bei der Abstützung mit einem elastischen Teil, das seinerseits wieder zwischen dem Display und einem dahinterliegenden harten Teil liegt, wird eine größere Einbautiefe benötigt. Bei einer zu dünnen Auslegung des elastischen Teils besteht wiederum das Risiko, dass bei ungünstiger Toleranzlage ein sehr hoher Druck auf die Staubdichtung auf der Vorderseite erfolgen kann.

US 2016/062523 A1 offenbart einen Befestigungsclip zur Montage eines Displays in einem Gehäuse, umfassend einen Grundkörper mit wenigstens einem Rastelement (Haken) zur Verrastung in einer Montageausnehmung (Öffnung im Gehäuse in die der Haken hineingreift) des Gehäuses, wobei das Rastelement einen in einer Montagerichtung aufragenden Steg (vertikaler Steg des Hakens an dessen Ende die Nase des Hakens ausgebildet ist) mit einer Rastnase (Rastnase am Ende des vertikaler Stegs des Hakens) aufweist. US 8 264 635 B2 offenbart eine Anzeige mit einem Touchscreen-Panel, das auf der Betrachterseite eines LCD-Panels montiert ist und zusammen mit dem LCD-Panel über ein Befestigungsteil an einem Rahmen der Anzeige befestigt ist. Das Befestigungsteil hat einen Haken, der in eine Öffnung des Rahmens eingreift und somit dort befestigt ist.

Vor diesem Hintergrund liegt der vorliegenden Erfindung die Aufgabe zu Grunde, einen Befestigungsclip anzugeben, welcher eine kostengünstige und gleichzeitig schnelle Montage sowie Demontage eines Displays in einem Gehäuse erlaubt, um die Reparatur etwa im Fall von Staubeinschlüssen oder Verschmutzungen zu ermöglichen.

Gelöst wird diese Aufgabe durch einen Befestigungsclip zur Montage eines Displays in einem Gehäuse gemäß den Merkmalen des unabhängigen Anspruchs 1, sowie eine Anzeigevorrichtung gemäß dem nebengeordneten Anspruch 7, in welchem die genannten Befestigungsclips Verwendung finden. Sinnvolle Ausgestaltungen des Befestigungsclips wie auch der Anzeigevorrichtung können den sich jeweils anschließenden abhängigen Ansprüchen entnommen werden.

Erfindungsgemäß vorgesehen ist in diesem Zusammenhang ein Befestigungsclip zur Montage eines Displays in einem Gehäuse, umfassend einen Grundkörper mit wenigstens einem Rastelement zur Verrastung in einer Montageausnehmung des Gehäuses und wenigstens einer Federlasche zur federnden Abstützung des Displays, wobei das Rastelement benachbart zu einer Durchgriffsöffnung des Grundkörpers einen in einer Montagerichtung aufragenden Federsteg mit einer die Durchgriffsöffnung überragenden Rastnase aufweist und die Federlasche in einem entspannten Zustand in die Montagerichtung aufgebogen und bei der Montage entgegengesetzt zur Montagerichtung elastisch spannbar ist.

Ein solcher Befestigungsclip löst die beschriebenen Probleme bei der Montage von Displays. Der Befestigungsclip wird hierbei mit seiner wenigstens einen Federlasche gegen das zu montierende Display und dieses hierdurch mit einer definierten Kraft gegen die Staubdichtung gedrückt. Die Federkraft ist durch die Geometrie und den Werkstoff des Befestigungsclips bestimmt. Durch die Einbauhöhe des Befestigungsclips in dem Gehäuse kann die Federkraft projektspezifisch variiert werden. Er wird dabei mit seinem Rastelement in eine Montageausnehmung des Gehäuses gerastet, was an mehreren Stellen des Gehäuses im Umfangsbereich des Displays erfolgt. Der Befestigungsclip ist so gestaltet, dass er mit einfachem spitzen Werkzeug, etwa einem Schraubendreher, durch Wegbiegen des Rastelements von einem am Gehäuse vorgesehenen Gegenrastelement, insbesondere einer Hinterschneidung in der Montageausnehmung, aus der Verrastung gelöst werden kann. Der spitze Gegenstand wirkt dabei als Hebel, welcher durch die Durchgriffsöffnung hindurch an dem Rastelement angesetzt wird. Dadurch ist eine einfache Demontage im Servicefall bei einem defekten Display oder während der Montage eines Bedienteils im Falle einer Verschmutzung möglich.

In sinnvoller Weiterbildung kann vorgesehen sein, dass das Rastelement beidseitig von in Montagerichtung aufragenden, biegesteifen Positionierelementen flankiert ist, wobei die Positionierelemente das Rastelement in Montagerichtung überragen und jeweils einen in Montagerichtung stirnseitigen Anschlag, sowie jeweils einen von dem Rastelement abgewandten Seitenanschlag aufweisen, wobei die Rastnase in eine Verrastungsrichtung jedoch die Positionierelemente überragt.

Dies sorgt für eine definierte Position des Befestigungsclips in der Montageausnehmung und hält das Rastelement frei, so dass es bei der Betätigung nicht gegen Gehäuseteile stößt, die ein Ausrasten des Rastelements verhindern würden. Mit ihren Anschlägen umhausen sie das Rastelement und erleichtern das Einführen des Befestigungsclips in der Montageausnehmung. Die Positionierelemente können im Sinne der Erfindung auch zu einem durchgehenden Element verbunden sein und das Rastelement insoweit auch bogen- oder klammerförmig umgreifen.

Weiter kann es sinnvoll sein, wenn in konkreter Ausgestaltung die wenigstens eine Federlasche, oder mehrere Federlaschen gemeinsam, einen Federbogen ausbildet, welcher zwei endständige Kontaktflächen zur Kontaktierung des Displays ausbildet und mittig einen biegesteifen Befestigungsbereich aufweist, welcher in den Grundkörper übergeht. Während eine einseitige Federwirkung ein Verdrehen des Befestigungsclips begünstigt, sorgt eine solche, insbesondere eine symmetrische, Ausgestaltung für eine gerade Positionierung.

In konkreter Ausbildung des Befestigungsclips kann der Grundkörper im Wesentlichen T-förmig gebildet sein, wobei das Rastelement und vorzugsweise vorhandene Positionierelemente an einem Querbalken angeordnet sind und sich die wenigstens eine Federlasche von einem Mittelbalken forterstreckt.

Um besonders günstige Federeigenschaften in Richtung des der Rastnase zugewandten Endes des Federstegs zu erreichen und insbesondere ein geeignetes Festkörpergelenk zu schaffen, kann vorgesehen sein, dass sich der Federsteg in Richtung der Rastnase verjüngt.

Weiter kann es sinnvoll sein, wenn die Rastnase auf ihrer vom Federsteg abgewandten Seite abgeschrägte Kanten aufweist und auf ihrer der DurchgriffsÖffnung zugewandten Seite mit dem Federsteg einen rechten Winkel oder einen spitzen Winkel einschließt. Auf diese Weise kann sie beim Einführen in die Montageausnehmung leicht allein durch die Hineinbewegung des Befestigungsclips in die Montageausnehmung weggedrückt werden.

In der konkreten Anwendung kann ferner eine Anzeigevorrichtung mit einem lösbar montierten Display, umfassend ein Gehäuse, in dem eine Mehrzahl von vorstehend beschriebenen Befestigungsclips das Display unmittelbar oder mittelbar gegen ein Frontglas in dem Gehäuse halten, wobei das Gehäuse eine Mehrzahl von um das Display herum verteilten Montageausnehmungen zur Aufnahme jeweils eines Rastelements aufweist, die jeweils eine Hinterschneidung ausbilden, in welche die Rastnase eingreift. Derartige Montageausnehmungen beiderseits der Rastelemente können hierbei Raum für die Rastelemente umgebende Positionierelemente freihalten und tiefer sein als die Höhe, über welche die Rastelemente über den Grundkörpern aufragen. Dies hält die Rastelemente frei von anderen Kontakten als mit der Hinterschneidung, welche eine Rastkante als Gegenrastmittel in dem Gehäuse bildet.

Die vorstehende Erfindung wird im Folgenden anhand eines Ausführungsbeispiels näher erläutert.

Es zeigen
- Figur 1: ein Gehäuse mit einem Display, das mit vier Befestigungsclips gehalten ist in einer rückwärtigen Draufsicht,
- Figur 2: ein Detail einer seitlichen Querschnittsdarstellung des Gehäuses gemäß Figur 1,
- Figur 3: einen Befestigungsclip in einer perspektivischen Darstellung von schräg oben, sowie
- Figur 4: den Befestigungsclip gemäß Figur 3 in einer perspektivischen Querschnittsdarstellung durch eine Mittelebene.

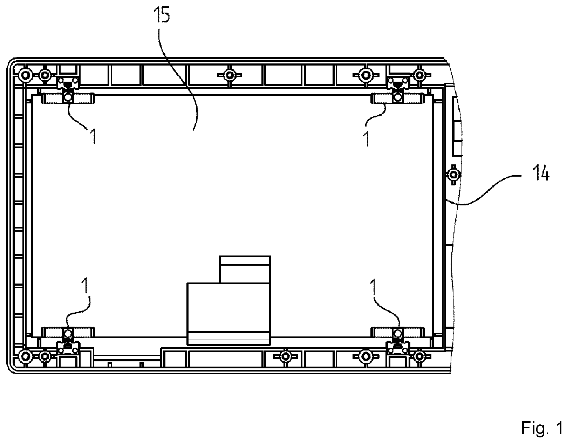

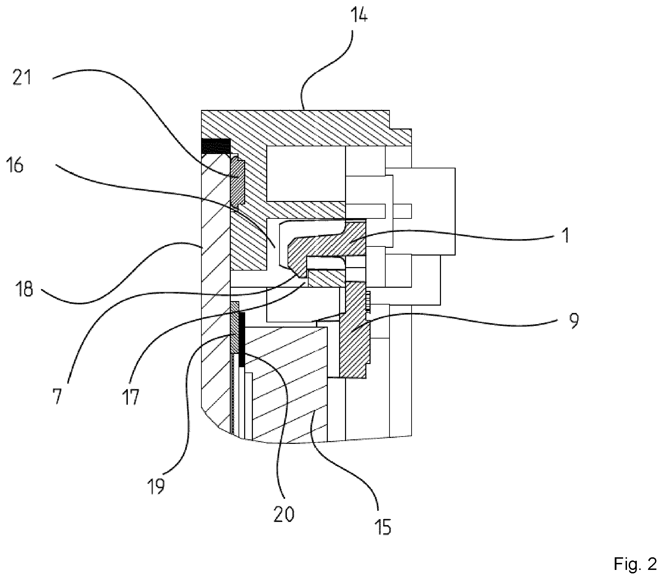

Figur 1 zeigt ein Gehäuse 14 mit einem Display 15, welches mithilfe von vier Befestigungsclips 1 in dem Gehäuse gehalten ist. Wie in Figur 2 zu erkennen ist, befinden sich um das Display 15 herum im Gehäuse eine Mehrzahl von Montageausnehmungen 16, in welche nach dem Einlegen des Displays 15 die Befestigungsclips 1 eingesteckt werden und damit das Display 15 befestigt wird.

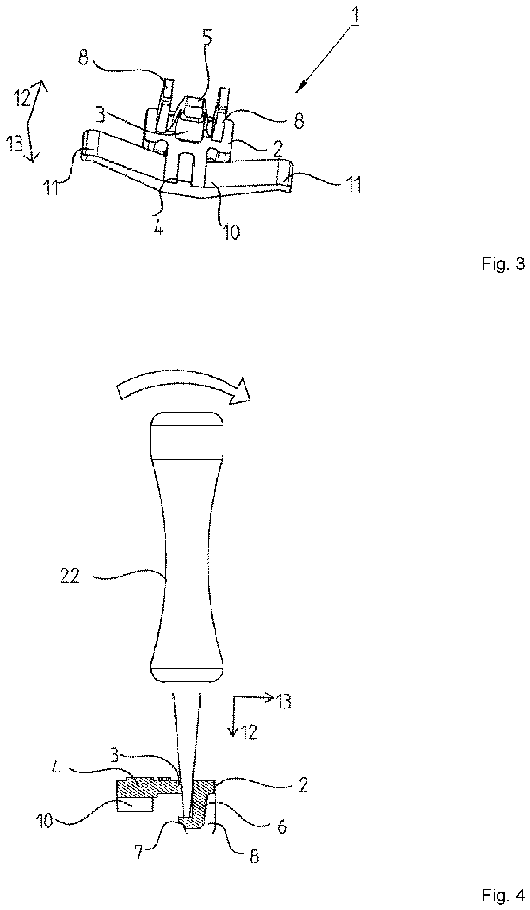

Wie aus Figur 3 hervorgeht, weist ein Befestigungsclip 1 einen Grundkörper 2 auf, an dem zum Einen in einem Befestigungsbereich 4 wenigstens eine Federlasche 9 in Form eines Federbogens 10 angeordnet ist. Der Federbogen 10 weist an seinen beiden Enden an der bestimmungsgemäß dem Display 15 zugewandten Seite Kontaktflächen 11 auf, welche nach der Installation gegen das Display 15 drücken und dieses elastisch gegen eine Staubdichtung 20 halten. Dies kann in der Querschnittsdarstellung der Figur 2 nachvollzogen werden. Hierdurch ist verhindert, dass zwischen dem Display 15 und einer für eine Touchfunktion des Displays 15 vorgesehenen Zwischenlage 19, oder auch zwischen dieser und einem Frontglas 18, kein Staub oder Schmutz eindringen und die Sicht auf das Display beeinflussen kann. Aufgrund einer geeigneten Materialwahl lässt sich der Druck des Befestigungsclips 1 gegen das Display 15 steuern. Ebenfalls eignet sich zu diesem Zweck eine Variation der Tiefe einer in der Montageausnehmung 16 vorgesehenen Hinterschneidung 17. In diese Hinterschneidung 17 greift ein Rastelement 5 des Befestigungsclips 1 ein und verrastet mit dieser, indem eine Rastnase 7 beim Einschieben von der Rastkante nach hinten gedrückt wird und bei deren Überschreiten in die Hinterschneidung 17 einrastet. Die Rastnase 7 ist hierzu am freien Ende eines Federstegs 6 angeordnet, welcher sich in Richtung der Rastnase 7 verjüngt und dadurch ein Festkörpergelenk ausbildet, gegen welches die Rastnase 7 in Gegenrichtung zu einer Verrastungsrichtung 13 elastisch weggedrückt werden kann.

Beiderseits des Rastelements 5 sind auf einem T-förmigen Bereich des Grundkörpers 2 zwei Positionierelemente 8 angeordnet, deren Form weitgehend an die Montageausnehmung 16 angepasst ist. Die Positionierelemente 8 sorgen dafür, dass der Befestigungsclip weitgehend spielfrei in der Montageausnehmung 16 eingesetzt ist, bilden in Montagerichtung 12 einen Anschlag des Befestigungsclips 1 und das Rastelement 5 verhindert ein Herausfallen und sorgt für ein Andrücken des Displays 15.

Um eine leichte Demontage zu ermöglichen, muss im eingerasteten Zustand das Rastelement 5 gegen die Federkraft des aus dem Federsteg 6 gebildeten Festkörpergelenks gegen die Verrastungsrichtung 13 von der Hinterschneidung 17 weggedrückt werden. Dies gelingt durch einen beliebigen, passenden Hebel 22, etwa einen kleinen Schraubendreher, welcher durch eine Durchgriffsöffnung 3 am Fuße des Rastelements 5 unter die Rastnase 7 geschoben werden kann. Durch eine Bewegung des Hebels 22 in Verrastungsrichtung 13 wird der Federsteg 6 weggebogen und der Befestigungsclip 1 wird von dem Federbogen 10 von dem Display 15 entgegen der Montagerichtung 12 weggedrückt. Nach der so erfolgten Lösung können nach und nach alle Befestigungsclips 1 und schließlich das Display 15 entnommen werden.

Vorstehend beschrieben ist somit ein Befestigungsclip, welcher eine kostengünstige und gleichzeitig schnelle Montage sowie Demontage eines Displays in einem Gehäuse erlaubt, um die Reparatur etwa im Fall von Staubeinschlüssen oder Verschmutzungen zu ermöglichen.

### BEZUGSZEICHENLISTE

- 1: Befestigungsclip
- 2: Grundkörper
- 3: Durchgriffsöffnung
- 4: Befestigungsbereich
- 5: Rastelement
- 6: Federsteg
- 7: Rastnase
- 8: Positionierelement
- 9: Federlasche
- 10: Federbogen
- 11: Kontaktflächen
- 12: Montagerichtung
- 13: Verrastungsrichtung
- 14: Gehäuse
- 15: Display
- 16: Montageausnehmung
- 17: Hinterschneidung
- 18: Frontglas
- 19: Zwischenlage
- 20: Staubdichtung
- 21: Klebemittel
- 22: Hebel

## Patentansprüche

1. Befestigungsclip zur Montage eines Displays (15) in einem Gehäuse (14), umfassend einen Grundkörper (2) mit wenigstens einem Rastelement (5) zur Verrastung in einer Montageausnehmung (16) des Gehäuses (14) und wenigstens einer Federlasche (9) zur federnden Abstützung des Displays (15), wobei das Rastelement (5) benachbart zu einer Durchgriffsöffnung (3) des Grundkörpers (2) einen in einer Montagerichtung (12) aufragenden Federsteg (6) mit einer die Durchgriffsöffnung (3) überragenden Rastnase (7) aufweist und die Federlasche (9) in einem entspannten Zustand in die Montagerichtung (12) aufgebogen und bei der Montage entgegengesetzt zur Montagerichtung (12) elastisch spannbar ist.

2. Befestigungsclip gemäß Anspruch 1, **dadurch gekennzeichnet, dass** das Rastelement (5) beidseitig von in Montagerichtung (12) aufragenden, biegesteifen Positionierelementen (8) flankiert ist, wobei die Positionierelemente (8) das Rastelement (5) in Montagerichtung (12) überragen und jeweils einen in Montagerichtung (12) stirnseitigen Anschlag, sowie jeweils einen von dem Rastelement (5) abgewandten Seitenanschlag aufweisen, wobei die Rastnase (7) in einer Verrastungsrichtung (13) jedoch die Positionierelemente (8) überragt.

3. Befestigungsclip gemäß einem der Ansprüche 1 oder 2, **dadurch gekennzeichnet, dass** die wenigstens eine Federlasche (9), oder mehrere Federlaschen (9) gemeinsam, einen Federbogen (10) ausbildet, welcher zwei endständige Kontaktflächen (11) zur Kontaktierung des Displays (15) ausbildet und mittig einen biegesteifen Befestigungsbereich (4) aufweist, welcher in den Grundkörper (2) übergeht.

4. Befestigungsclip gemäß einem der vorhergehenden Ansprüche,
**dadurch gekennzeichnet, dass** der Grundkörper (2) im Wesentlichen T-förmig gebildet ist, wobei das Rastelement (5) und vorzugsweise vorhandene Positionierelemente (8) an einem Querbalken angeordnet sind und sich die wenigstens eine Federlasche von einem Mittelbalken forterstreckt.

5. Befestigungsclip gemäß einem der vorhergehenden Ansprüche,
**dadurch gekennzeichnet, dass** sich der Federsteg (6) in Richtung der Rastnase (7) verjüngt.

6. Befestigungsclip gemäß einem der vorhergehenden Ansprüche,
**dadurch gekennzeichnet, dass** die Rastnase (7) auf ihrer vom Federsteg (6) abgewandten Seite abgeschrägte Kanten aufweist und auf ihrer der Durchgriffsöffnung (3) zugewandten Seite mit dem Federsteg (6) einen rechten Winkel oder einen spitzen Winkel einschließt.

7. Anzeigevorrichtung mit einem lösbar montierten Display, umfassend ein Gehäuse (14), in dem eine Mehrzahl von Befestigungsclips (1) gemäß einem der vorhergehenden Ansprüche das Display (15) unmittelbar oder mittelbar gegen ein Frontglas (18) in dem Gehäuse (14) halten, wobei das Gehäuse (14) eine Mehrzahl von um das Display (15) herum verteilten Montageausnehmungen (16) zur Aufnahme jeweils eines Rastelements (5) aufweist, die jeweils eine Hinterschneidung (17) ausbilden, in welche die Rastnase (7) eingreift.

8. Anzeigevorrichtung gemäß Anspruch 7, **dadurch gekennzeichnet, dass** die Montageausnehmungen (16) beiderseits der Rastelemente (5) Raum für die Rastelemente (5) umgebende Positionierelemente (8) freihalten und tiefer sind als die Höhe, über welche die Rastelemente (5) über den Grundkörpern (2) aufragen.

## Claims

1. Fastening clip for mounting a display (15) in a housing (14), comprising a main body (2) which has at least one latching element (5) for latching in a mounting recess (16) of the housing (14) and at least one spring tab (9) for resiliently supporting the display (15), wherein the latching element (5) has, adjacent to a through-opening (3) of the main body (2), a spring bar (6) which projects in a mounting direction (12) and has a latching lug (7) projecting beyond the through-opening (3), and the spring tab (9) is bent up in the mounting direction (12) in a relaxed state and can be resiliently biased counter to the mounting direction (12) during mounting.

2. Fastening clip according to claim 1, **characterized in that** the latching element (5) is flanked on both sides by rigid positioning elements (8) projecting in the mounting direction (12), the positioning elements (8) projecting beyond the latching element (5) in the mounting direction (12) and each having an end stop in the mounting direction (12) and a side stop facing away from the latching element (5), the latching lug (7), however, projecting beyond the positioning elements (8) in a latching direction (13).

3. Fastening clip according to either of claims 1 or 2, **characterized in that** the at least one spring tab (9), or a plurality of spring tabs (9) together, forms a spring bow (10) which forms two end contact surfaces (11) for contacting the display (15) and has a rigid fastening region (4) in the middle which transitions into the main body (2).

4. Fastening clip according to any of the preceding claims,
**characterized in that** the main body (2) is substantially T-shaped, the latching element (5) and preferably present positioning elements (8) being arranged on a crossbeam, and the at least one spring tab extending away from a central beam.

5. Fastening clip according to any of the preceding claims,
**characterized in that** the spring bar (6) tapers in the direction of the latching lug (7).

6. Fastening clip according to any of the preceding claims,
**characterized in that** the latching lug (7) has chamfered edges on its side facing away from the spring bar (6), and encloses a right angle or an acute angle with the spring bar (6) on its side facing toward the through-opening (3).

7. Display device having a detachably mounted display, comprising a housing (14) in which a plurality of fastening clips (1) according to any of the preceding claims hold the display (15) directly or indirectly against a front glass (18) in the housing (14), wherein the housing (14) has a plurality of mounting recesses (16) distributed around the display (15) for receiving a latching element (5) in each case, which mounting recesses each form an undercut (17) into which the latching lug (7) engages.

8. Display device according to claim 7, **characterized in that** the mounting recesses (16) on both sides of the latching elements (5) keep space free for the positioning elements (8) surrounding the latching elements (5) and are deeper than the height above which the latching elements (5) project beyond the main bodies (2).

## Revendications

1. Clip de fixation pour le montage d'un écran (15) dans un boîtier (14), comprenant un corps de base (2) comportant au moins un élément d'encliquetage (5) pour l'encliquetage dans un évidement de montage (16) du boîtier (14) et au moins une patte élastique (9) pour le support élastique de l'écran (15), dans lequel l'élément d'encliquetage (5) présente, à proximité d'une ouverture de passage (3) du corps de base (2), une barrette élastique (6) faisant saillie dans une direction de montage (12) et comportant un ergot d'encliquetage (7) faisant saillie de l'ouverture de passage (3), et la patte élastique (9) est, dans un état détendu, recourbée dans la direction de montage (12) et peut être tendue élastiquement en sens inverse de la direction de montage (12) lors du montage.

2. Clip de fixation selon la revendication 1, **caractérisé en ce que** l'élément d'encliquetage (5) est flanqué de part à d'autre d'éléments de positionnement (8) résistants à la flexion et faisant saillie dans la direction de montage (12), dans lequel les éléments de positionnement (8) dépassent de l'élément d'encliquetage (5) dans la direction de montage (12) et présentent respectivement une butée frontale dans la direction de montage (12), ainsi que respectivement une butée latérale opposée à l'élément d'encliquetage (5), dans lequel l'ergot d'encliquetage (7) dépasse toutefois des éléments de positionnement (8) dans une direction d'encliquetage (13).

3. Clip de fixation selon l'une des revendications 1 ou 2, **caractérisé en ce que** l'au moins une patte élastique (9), ou plusieurs pattes élastiques (9) ensemble, forme un arc élastique (10) qui forme deux surfaces de contact (11) d'extrémité pour la mise en contact de l'écran (15) et présente au milieu une zone de fixation (4) résistante à la flexion qui se prolonge dans le corps de base (2).

4. Clip de fixation selon l'une des revendications précédentes,
**caractérisé en ce que** le corps de base (2) est formé sensiblement en forme de T, dans lequel l'élément d'encliquetage (5) et de préférence les éléments de positionnement (8) existants sont disposés sur une barre transversale et l'au moins une patte élastique s'étend depuis une barre centrale.

5. Clip de fixation selon l'une des revendications précédentes,
**caractérisé en ce que** la barrette élastique (6) se rétrécit en direction de l'ergot d'encliquetage (7).

6. Clip de fixation selon l'une des revendications précédentes,
**caractérisé en ce que** l'ergot d'encliquetage (7) présente des bords biseautés sur son côté opposé à la barrette élastique (6) et forme un angle droit ou un angle aigu avec la barrette élastique (6) sur son côté tourné vers l'ouverture de passage (3).

7. Dispositif d'affichage comportant un écran monté de manière amovible, comprenant un boîtier (14) dans lequel une pluralité de clips de fixation (1) selon l'une des revendications précédentes maintiennent l'écran (15) directement ou indirectement contre un verre frontal (18) dans le boîtier (14), dans lequel le boîtier (14) présente une pluralité d'évidements de montage (16) répartis autour de l'écran (15) pour la réception de respectivement un élément d'encliquetage (5), lesquels forment respectivement une contre-dépouille (17) dans laquelle l'ergot d'encliquetage (7) vient en prise.

8. Dispositif d'affichage selon la revendication 7, **caractérisé en ce que** les évidements de montage (16) maintiennent dégagés un espace de part et d'autre des éléments d'encliquetage (5) pour des éléments de positionnement (8) entourant les éléments d'encliquetage (5) et sont plus profonds que la hauteur au-dessus de laquelle les éléments d'encliquetage (5) font saillie au-dessus des corps de base (2).
